Europäisches Patentamt

**European Patent Office**

Office européen des brevets

(19)

(11) Publication number: **0 112 595**
**B1**

(12)

# EUROPEAN PATENT SPECIFICATION

(45) Date of publication of patent specification: **06.05.87**

(51) Int. Cl.⁴: **G 11 B 7/08**

(21) Application number: **83201799.0**

(22) Date of filing: **15.12.83**

(54) Electrodynamic device for translating an objective.

(30) Priority: **24.12.82 NL 8204981**

(43) Date of publication of application:
**04.07.84 Bulletin 84/27**

(45) Publication of the grant of the patent:
**06.05.87 Bulletin 87/19**

(84) Designated Contracting States:
**DE FR GB IT**

(56) References cited:
**EP-A-0 011 149**
**EP-A-0 012 650**
**EP-A-0 066 317**
**FR-A-2 351 468**
**US-A-4 185 836**

**PATENTS ABSTRACTS OF JAPAN, vol. 7, no.
10 (P-168)1155r, 14th January 1983**
**PATENTS ABSTRACTS OF JAPAN, vol. 6, no.
206 (P-149)1084r, 19th October 1982, page 161
P 149**

(73) Proprietor: **N.V. Philips' Gloeilampenfabrieken
Groenewoudseweg 1
NL-5621 BA Eindhoven (NL)**

(72) Inventor: **Jansen, Gerardus L. M.
c/o INT. OCTROOIBUREAU B.V. Prof. Holstlaan 6
NL-5656 AA Eindhoven (NL)**

(74) Representative: **Van Weele, Paul Johannes Frits
et al
INTERNATIONAAL OCTROOIBUREAU B.V. Prof.
Holstlaan 6
NL-5656 AA Eindhoven (NL)**

(56) References cited:
**PATENTS ABSTRACT OF JAPAN, vol. 6, no. 82
(P-116)960r, 20th May 1982, page 54 P 116**
**PATENTS ABSTRACTS OF JAPAN, vol. 3, no.
98 (E-131) 18th August 1979, page 97 E 131**
**PATENTS ABSTRACTS OF JAPAN, vol. 7, no.
73 (P-186)1218r, 25th March 1983**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

**Description**

The invention relates to an electrodynamic device for translating an objective, which is electrodynamically movable along its optical axis by means of electrical actuator-coil means, along a translation path perpendicular to the optical axis, which device comprises a frame, a slide which is translatable relative to the frame along the translation path, two iron supporting rods for the slide, which rods are connected to the frame and which extend parallel to the translation path, drive coils which are arranged around and supported by the supporting rods and which are connected to the slide, and iron stator-yoke means which carry permanent magnetic stator magnets and which together with the stator magnets and the supporting rods form a permanent-magnetic circuit for each of the drive coils, which circuits each have an air gap in which the drive coil is translatable.

Such an electrodynamic device is described in JP—A—57-180 35. The permanent-magnetic stator magnets are annular and are radially magnetized. Each of the two supporting rods carries such a stator magnet on each end. An iron sleeve, which forms part of the stator-yoke means, is arranged around the two stator magnets of each supporting rod, the sleeve being coaxial with the supporting rod. The sleeve is formed with a longitudinal slot for the passage of that part of the slide which constitutes the connection with the drive coil which can translate within the sleeve. The slide carries permanent-magnetic actuator means which co-operate with the actuator-coil means of the objective.

The construction of the permanent-magnetic stator of the known device comprises a comparatively large number of parts and is intricated as a result of the use of the slotted sleeve-shaped stator-yoke means. The permanent-magnetic actuator means on the slide add to the mass to be translated along the translation path.

It is the object of the invention to provide a device of the type specified in the opening paragraph, which is of a simpler construction and which has a lower mass to be translated. The electrodynamic device according to the invention is characterized in that each stator magnet comprises a flat magnetic strip which extends parallel to the supporting rods so that said air gaps are formed, the surfaces of the magnetic strips which face the associated supporting rods extend in a plane parallel to the translation path and to the optical axis of the objective, and the electrical actuator-coil means, which are movable in at least one said air gaps, are arranged on a mounting for the objective, which mounting is movably connected to the slide by means of connecting means. In the inventive device the magnetic field in at least one of the air gaps between the stator magnets and the supporting rods co-operates both with the drive coil of the slide and with the actuator coil means for the objective.

It is to be noted that from US—A—4 185 836 a disc record player with a pick up arm is known.

That player is provided with a slide supported by one rod and with one drive-coil arranged around the rod. A magnetic circuit formed by iron stator means, a flat permanent strip magnet parallel to said rod has an air gap in which the drive coil can translate.

It is to be noted further that the idea to generate both focussing and tracking movement of an objective by coils movable in an airgap is *per se* known from EP—A—12650. However, the manner in which that idea has been worked out in the inventive device cannot be derived from that patent application.

An embodiment of the invention which simplifies the construction of the stator yoke is characterized in that the frame forms part of the permanent-magnetic circuit. The frame may be of soft-iron, for example, and can be manufactured from the sheet material by simple means. The stator magnets may be secured to the stator frame in a rapid and easy manner by a suitable adhesive.

A further embodiment of the invention may be used, which may have the advantages of the preceding embodiment and which is characterized in that the frame is shaped substantially as an open box with a bottom and upright walls, in that the stator magnets are secured to the inner sides of two of said walls which face one another, and in that the supporting rods are mounted on portions of another two of said walls which face one another. Preferably, the supporting rods have a circular cross-section. As is known, ground rods of circular cross-section are low cost, simple, precision parts. Supporting points for the supporting rods can be formed on the frame with the required precision in a comparatively simple manner.

Embodiments of the invention will now be described in more detail, by way of example, with reference to the drawings, in which:

Figure 1 is a plan view of one embodiment of symmetrically constructed electrodynamic device in accordance with the invention,

Fig. 2 is a sectional view taken on lines II—II in Fig. 1,

Fig. 3 is a sectional view taken on the lines III—III in Fig. 1,

Fig. 4 shows a part of Fig. 2 on an enlarged scale, and

Fig. 5 is a view similar to Fig. 4 showing another embodiment of the invention.

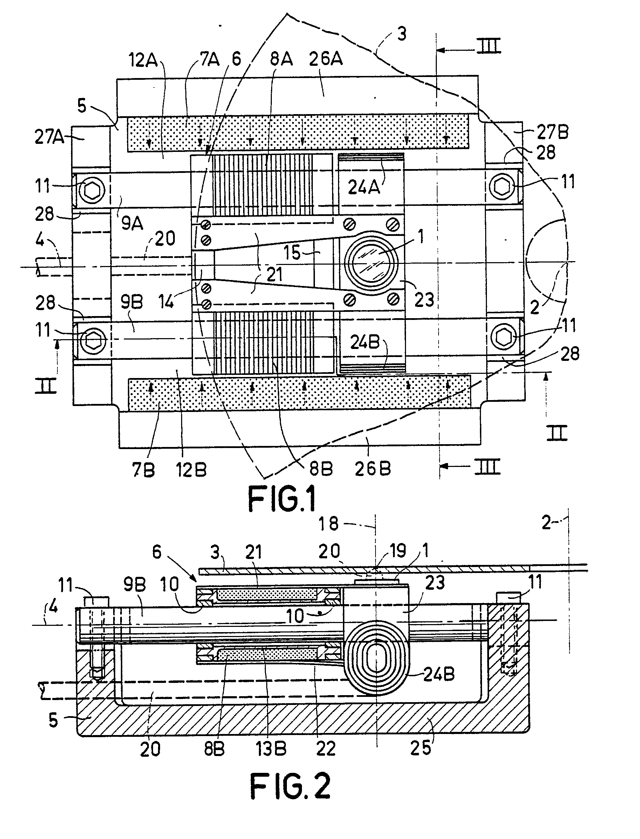

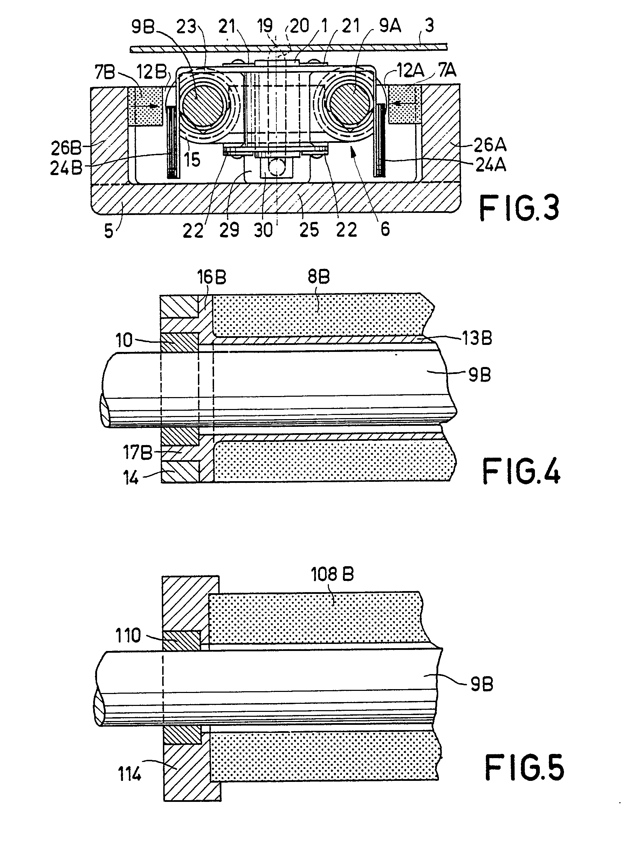

The electrodynamic device shown serves for translating an objective 1 along a radial path 4 relative to a disc 3 (see Fig. 2) which rotates about an axis of rotation. The device comprises a frame 5 and a slide 6 which carries the objective 1 and which can be translated relative to the frame along the radial path 4. The frame carries two permanent stator magnets 7A and 7B, which extend parallel to the path 4 and which are magnetized transversely of this path, the directions of magnetization being indicated by arrows in Fig. 1 and in Fig. 3. Two translatable drive coils 8A and 8B an electrically conductive material are movable in the magnetic field of the stator magnets.

A parallel-guide arrangement for the slide 6 comprises two parallel supporting rods or guide rods 9A and 9B and sliding bearing bushes 10 made of tetrafluoroethylene. The guide rods are secured to the frame 5 by bolt 11. The guide rods 9A and 9B form part of a magnetic circuit or stator yoke with an air gap 12A, 12B, respectively, between the stator magnet 7A and the guide rod 9A and between the stator magnet 7B and the guide rod 9B, respectively. The drive coils 8A and 8B are arranged around the respective guide rods 9A and 9B.

As is shown on an enlarged scale in Fig. 4, each drive coil 8A, B in the embodiment shown in Figs. 1 to 3 is supported by a cylindrical coil former 13A, B respectively. The coil formers 13A and 13B are arranged around the guide rods 9A and 9B respectively and are each provided internally with two of said sleeve bearing bushes 10, arranged one at the end of the respective former. The coil formers each form a structural part of the slide 6. In addition to the coil formers the slide comprises two end plates 14 and 15. The only function of these end plates is to interconnect the two coils 8A and 8B structurally and they are preferably made of a non-magnetic light-weight but strong material such as a plastic or aluminium. Fig. 4 shows that the coil former 13B comprises a flange 16B and a cylindrical collar 17B at its left-hand end, as viewed in the drawing. At its right-hand end also the coil former comprises a flange and a collar. The coil former 13A is similarly provided with flanges and collars. The collars engage in cylindrical apertures in the end plates 14 and 15 and are secured in these apertures, for example by adhesive. In this way the coil formers and the end plates together constitute a robust slide. Another possibility, in which the coils are not wound on coil formers, is shown in Fig. 5. As shown for the coil 108B in Fig. 5, the turns of each coil are rigidly interconnected to form a structural unit by connecting means such as an impregnating lacquer. Locally the end plate 114 is formed with annular recesses whose outer diameter corresponds to the outer diameter of the coils and in which recess the coils are secured by adhesive. In this way a slide can be formed by means of two coils and two end plates. The bearing bushes 110 are arranged in recesses in the end plates.

This embodiment in which the coils form a structural part of the slide has the advantage so that no separate coil formers are required, whilst the dimension of the slide measured in the direction of the path 4 may also be slightly smaller. However, the coil have now to be wound on a jig and the turns have to interconnected.

The objective 1 is movable relative to the slide 6 along its optical axis 18 so as to enable the movements of the disc 3 to be followed by the read spot 19 formed by a radiation beam 20 emitted by a suitable radiation source. The objective is mounted in a mounting or bracket 23 which is supported on the slide 6 by connecting means here consisting of two blade spring 21 on the upper side of the slide and two blade springs 22 on the lower side. The mounting 23 with the objective is movable to a limited extent along the optical axis 8 and carries stator-coil means in the form of actuator coils 24A and 24B are movable in the gaps 12A and 12B respectively between the guide rods 9A and 9B and the stator magnets 7A and 7B, so that the actuator coils co-operate with the fields of the stator magnets to exert forces on the objective along its optical axis. Thus, the stator magnets are used both for driving the slide along the axis 4 and for driving the objective along the axis 18.

The frame 5 is made of a magnetic material, for example iron, and forms part of the stator yoke on which carries the permanent magnets 7A and 7B and of which the guide rod 9A and 9B also form part, as already stated.

The device is constructed symmetrically relative to a plane containing the axes 4 and 18. The guide rods 9A and 9B are identical, as also are the drive coils 8A and 8B, the actuator coils 24A and 24B, and the stator magnets 7A and 7B. The guide rods are ground rods of circular cross-section, which as is known are the cheapest precision parts available.

The frame 5 is shaped substantially as an open box having a bottom 25 and upright walls 26A, 26B and 27A, 27B. At the corners of the box the walls do not join one another. The complete frame is formed from a single blank of sheet material, and walls being formed by portions which are bent up from the bottom 25. The stator magnets 7A and 7B are secured to the inner sides of the walls 26A and 26B, for example by a suitable glue. The lines of magnetic force of the magnets extend from the magnets 7A and 7B through the air gaps 12A and 12B to the guide rods 9A and 9B, whose ends are mounted on portions of the walls 27A and 27B. Thus, the guide rods are in contact with the magnetic frame 5, so that the magnetic circuit is closed through the frame.

In order to ensure that the guide rods 9A and 9B extend perfectly parallel to each other and are disposed at the same level, recesses 28 with V-shaped bottoms are formed in the walls 27A and 27B to receive the ends of the guide rods. These recesses can be formed with the required accuracy by a simple machining operation. No stringent requirements are imposed on the accuracy of the other parts of the frame 5. The accuracy of the guide arrangement for the slide 6 is mainly determined by the degree of accuracy of the guide rods 9A and 9B and the accuracy with which they extend parallel to each other and are supported at the same level by the frame.

In the wall 27A is an aperture 29 which *inter alia* serves for the passage of the radiation beam 20. On its underside the objective 1 carries a reflecting element 30 which reflects the radiation beam through an angle of 90°. The aperture 29 also serves for the passage of the electrical connecting wires to the coils 8A and 8B on the slide and the actuator coils 24A and 24B. These connecting wires and other electrical connections are not shown for the sake of simplicity and are irrelevant to the present invention. The means which are generally required for detecting the position of the objective 1 in the path 4 are not shown and are also irrelevant to the present invention.

## Claims

1. An electrodynamic device for translating an objective (1) which is electrodynamically movable along its optical axis by means of electrical actuator-coil means, (24A, 24B) along a translation path perpendicular to the optical axis, which device comprises:

— a frame (5),
— a slide (6) which is translatable relative to the frame along the translation path,
— two iron supporting rods (9A, 9B) for the slide, which rods are connected to the frame and which extend parallel to the translation path,
— drive coils (8A, 8B) which are arranged around and supported by the supporting rods and which are connected to the slide, and
— iron stator-yoke means which carry permanent magnetic stator magnets (7A, 7B) and which together with the stator magnets and the supporting rods form a permanent-magnetic circuit for each of the drive coils, which circuits each have an air gap (12A, 12B) in which the drive coil is translatable, characterized in that
— each stator magnet comprises a flat magnetic strip which extends parallel to the supporting rods so that said air gaps are formed,
— the surfaces of the magnetic strips which face the associated supporting rods extend in a plane parallel to the translation path and to the optical axis of the objective, and
— the electrical actuator-coil means (24A, 24B), which are movable in at least one said air gaps, are arranged on a mounting (23) for the objective, which ·mounting is movably connected to the slide by means of connecting means (21, 22).

2. An electrodynamic device as claimed in Claim 1, characterized in that the frame (5) forms part of the permanent-magnetic circuit.
3. An electrodynamic device as claimed in Claim 1 or 2, characterized in that

— the frame (5) is shaped substantially as an open box with a bottom (25) and upright walls (26A, 26B, 27A, 27B),
— the stator magnets (7A, 7B) are secured to the inner sides of two of said walls (26A, 26B) which face one another, and
— the supporting rods (9A, 9B) are mounted on portions of another two (27A, 27B) of said walls which face one another.

## Patentansprüche

1. Elektrodynamische Anordnung zum geradlinigen Verschieben eines Objektivs (1) das mittels elektrischer Betätigungsspulenmittel (24A, 24B) längs der optischen Achse elektrodynamisch beweglich ist über eine geradlinige Strecke senkrecht zu der optischen Achse, wobei diese Anordnung die folgenden Elemente aufweist:

— einen Rahmen (5),
— einen Schlitten (6), der gegenüber dem Rahmen über die geradlinige Strecke geradlinig beweglich ist,
— zwei eiserne Trägerstangen (9A, 9B) für den Schlitten, wobei diese Stangen mit dem Rahmen verbunden sind und sich parallel zu der geradlinigen Strecke erstrecken,
— Antriebsspulen (8A, 8B), die um die Trägerstangen angeordnet sind, von denselben unterstützt werden und mit dem Schlitten verbunden sind, und
— eiserne Ständerjochmittel, die dauermagnetische Ständermagneten (7A, 7B) tragen und die zusammen mit den Ständermagneten und den Trägerstangen für jede der Antriebsspulen einen Dauermagnetkreis bilden, wobei diese Dauermagnetkreise je einen Luftspalt (12A, 12B) aufweisen, in dem die Antriebsspule geradlinig verschiebbar ist,
dadurch gekennzeichnet, dass

— jeder Ständermagnet einen flachen Magnetstreifen aufweist, der sich parallel zu den Trägerstangen erstreckt, so dass die genannten Luftspalte gebildet werden,
— die Oberflächen der Magnetstreifen, die den zugeordneten Trägerstangen zugewandt sind, sich in einer Ebene parallel zu der geradlinigen Strecke und zu der optischen Achse des Objektivs erstrecken und
— die elektrischen Betätigungsspulenmittel (24A, 24B), die in wenigstens einem der genannten Luftspalte beweglich sind, auf einem Gestell (23) für das Objektiv angeordnet sind, wobei dieses Gestell mittels Verbindungsmittel (21, 22) beweglich mit dem Schlitten verbunden ist.

2. Elektrodynamische Anordnung nach Anspruch 1, dadurch gekennzeichnet, dass der Rahmen (5) einen Teil des Dauermagnetkreises bildet.
3. Elektrodynamische Anordnung nach Anspruch 1 oder 2, dadurch gekennzeichnet, dass

— der Rahmen (5) im wesentlichen als offener Kasten mit einem Boden (25) und stehenden Wänden (26A, 26B, 27A, 27B) ausgebildet ist,
— die Ständermagneten (7A, 7B) an der Innenseite zweier der genannten einander zugewandten Wände (26A, 26B) befestigt sind und
— die Trägerstangen (9A, 9B) an Teilen zweier anderer (27A, 27B) der genannten einander zugewandten Wände angeordnet sind.

## Revendications

1. Dispositif électrodynamique pour imprimer un mouvement de translation à un objectif qui, par des moyens constitués de bobines d'actionnement électriques, peut être déplacé par voie électrodynamique suivant son axe optique, dans un trajet de translation perpendiculaire à l'axe optique, dispositif comportant

— un châssis (5),
— un chariot (6) qui peut être animé d'un mouvement de translation par rapport au châssis suivant le trajet de translation,
— deux tiges de support en fer (9A, 9B) pour le chariot, tiges qui sont réunies au châssis et qui s'étendent parallèlement au trajet de translation,
— des bobines d'entraînement (8A, 8B) disposées autour des tiges de support tout en étant supportées par celles-ci, bobines qui sont réunies au chariot,
— et une culasse de stator qui porte des aimants de stator à aimantation permanente (7A, 7B) et qui, conjointement avec les aimants de stator et les tiges de support, forme un circuit magnétique permanent pour chacune des bobines d'entraînement, circuits qui présentent un entrefer dans lequel la bobine d'entraînement peut être animée d'un mouvement de translation, caractérisé en ce que

— chaque aimant de stator comporte une bande magnétique plate s'étendant parallèlement aux tiges de support de façon à former lesdits entrefers,
— les surfaces des bandes magnétiques situées vis-à-vis des tiges de support associées s'étendent dans un plan parallèle au trajet de translation et à l'axe optique de l'objectif et
— les bobines d'actionnement électriques (24A, 24B), qui peuvent être déplacées dans au moins l'un desdits entrefers, sont disposées sur une monture (23) pour l'objectif, monture qui est réunie de façon mobile au chariot par des moyens de liaison (21, 22).

2. Dispositif électrodynamique selon la revendication 1, caractérisé en ce que le châssis (5) fait partie du circuit magnétique permanent.

3. Dispositif électrodynamique selon la revendication 1 ou 2, caractérisé en ce que

— le châssis (5) affecte sensiblement la forme d'une boîte ouverte ayant un fond (25) et des parois verticales (26A, 26B, 27A, 27B),
— les aimants de stator (7A, 7B) sont fixés sur la face intérieure de deux parois verticales opposées (26A, 26B) et
— les tiges de support (9A, 9B) sont montées sur des parties de deux autres parois verticales opposées (27A, 27B).

FIG.1

FIG.2

1

FIG.3

FIG.4

FIG.5